# EUROPEAN PATENT APPLICATION

(11) **EP 3 064 106 A1**
(43) Date of publication of application: **07.09.2016**
(21) Application number: 16155913.3
(22) Date of filing: 16.02.2016
(51) Int. Cl.: A47J 37/07

(54) **A STARTING FUEL PREPARING DEVICE FOR A CHARCOAL CHIMNEY STARTER, AND THE COMBINATION OF A CHARCOAL CHIMNEY STARTER AND THE STARTING FUEL PREPARING DEVICE**

(30) Priority: 19.02.2015 DK 201570093
(71) Applicant: Idébank Thy Holding Aps, 7700 Thisted (DK)
(72) Inventor: KLOSTER, Hans Brusgård, 7700 Thisted (DK)
(74) Representative: Zacco Denmark A/S

(57) **Abstract**

The invention relates to a starting fuel (S) preparing device (10) for a charcoal chimney starter (200), said device (10) including a top portion (T), a base portion (B), a wall (11) extending generally between said top portion (T) and said base portion (B) and defining a housing, a platform (30) inside said wall (11) configured for supporting thereon said starting fuel (S) in solid form, a fan (25) for drawing combustion air into said housing, characterised in an air guiding structure (150) disposed between said base portion (B) and said top portion (T), a first air outlet structure (38) disposed along said wall (11), be-tween said platform (30) and said wall (11), said air guiding structure (150) being configured for guiding at least a portion of said combustion air to said first air outlet structure (38), and said housing preferably being configured for directly or indirectly support of said charcoal chimney starter (200) above said platform (30).

## Description

### FIELD OF THE INVENTION

Solid starting fuels are commonly used for igniting a cooking fuel such as charcoal barbeque (BBQ) briquettes. The present invention relates to a fire or combustion accelerator suitable for improved burning of solid starting fuels, as well as to a chimney starter for charcoal briquettes in combination with such a fire or combustion accelerator. More specifically, the present invention introduces a highly efficient device for use by anyone responsible wanting to quickly ignite and accelerate the burning of briquettes or similar cooking fuels and in doing so reduce the time needed for their use in cooking, barbequing, campfires etc.

### BACKGROUND OF THE INVENTION

It is a popular activity to cook foods over a charcoal BBQ grill, but certain drawbacks to this process have led to the development of various gas fired barbeque products that mimic the effects of charcoal grilling. Such gas fired products, however, lack the ability to impart a smoked flavor to the items being grilled. For this reason many people still prefer to cook over charcoal fires in BBQ grills. However, the starting time required to get coals up to a proper state of combustion is considered a disadvantage. Conventionally, this starting process typically requires at least thirty minutes using starting fuels and a chimney starter. An illustrative example of a canister-like chimney starter is disclosed in US patent 5,469,835 where a conical grate for supporting the cooking fuel is shown.

### BRIEF SUMMARY OF THE INVENTION

The present inventive device is useful for accelerating the burning of solid starting fuels, such as solid hydrocarbon firelighter blocks (e.g. the ZIP™ firelighter), paper, wood, and of charcoal briquettes or other cooking fuel contained in a chimney starter placed on top of the device. It involves a fan, preferably an electric fan, and preferably all that may be needed to operate the device, including electronic switches, batteries, indicator lights and if necessary any auxiliary jacks for external power sources. Examples of such a device are disclosed in US patent application 2007/0044784 and DK patent no. 177 638 which, however, do not allow for a good burning nor allow for the production of a reliable such device at low cost.

In accordance with the invention improved burning characteristics of the starting fuel and of the cooking fuel in the chimney may be obtained by providing an essentially vertical first flow of combustion air exiting the device through one or more exit openings around a platform supporting the starting fuel, and preferably also another second upward flow of combustion air exiting the device through openings arranged centrally in the platform, around which openings the starting fuel is placed.

In this manner, the time required for obtaining cooking fuel ready for use in a standard size grill may be reduced to significantly below 30 minutes. Having the aforementioned first flow of air may also provide a cooling of the peripheral wall that defines the device housing, whereby electric components, including the fan, is better protected against the heat generated during the combustion process.

The first and second air flows may provide particular benefits in respect to the combustion of the cooking fuel, such as where the cooking fuel is held in a chimney of the type having a conical cooking fuel supporting grate, in that cooking fuel supported in the annular space between the conical grate and the peripheral wall of the chimney is directly exposed to flames rising vertically up in a controlled manner from the starting fuel that is arranged in an annular supporting area on the support platform between the first and second air flow.

An embodiment of the invention will now be described, by way of example only, with reference to the accompanying drawings, as follows;

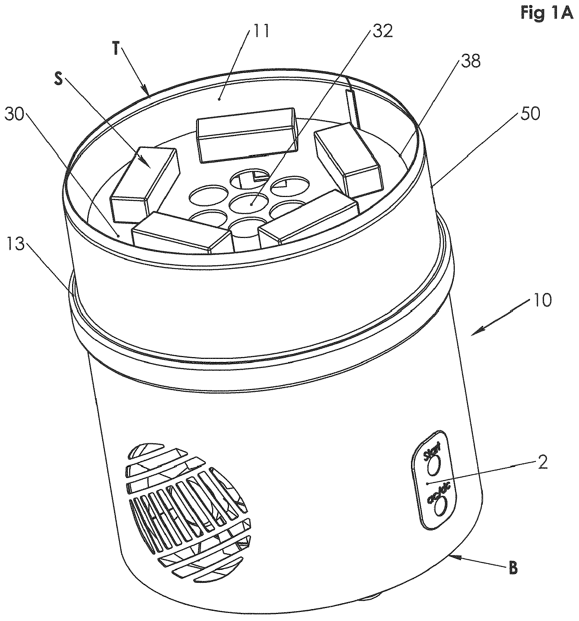

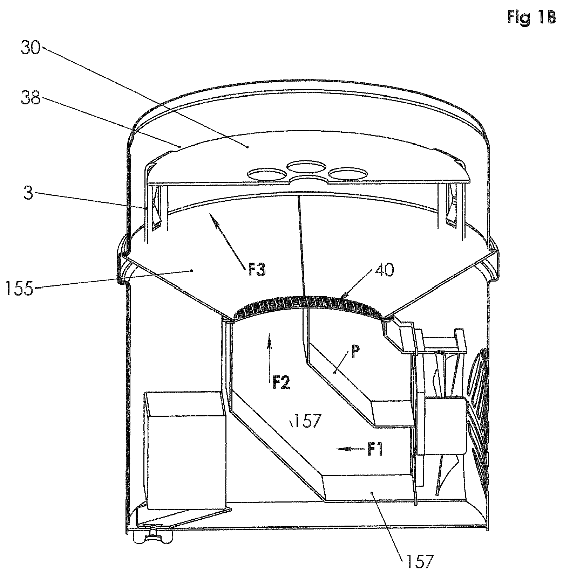

Fig. 1 a is a perspective side view of a device according to the invention,
Fig. 1 b is a perspective cross-sectional view of the device of fig. 1 a,
Fig. 2 is a side view of a combination comprising the device of fig. 1a with a chimney starter,
Fig. 3 is a cross-sectional view of the combination of fig. 2,
Fig. 4a is a perspective view of an insert component for the device of fig. 1 a,
and
Fig. 4b shows an exploded view of an air guidance structure of the insert component of fig. 4a.

### BRIEF DESCRIPTION OF THE DRAWINGS

As used herein, "starting" of a cooking fuel refers to igniting and partially combusting the cooking fuel prior to use of the cooking fuel to barbeque food in a grill. As used herein, "barbequing" refers to using partially combusted charcoal, wood, or other coals to cook food, typically via indirect heating and hot gases emitted from the cooking fuel. Barbequing typically occurs in outdoor environments and typically is a slower cooking process than grilling or broiling, in which food is typically placed near hotter direct heat sources, such as open flames. As such, a necessary step to barbeque foods is to prepare the charcoal, wood, or other cooking fuel so that it is radiating or otherwise emitting a desirable amount of heat. Preparing charcoal briquettes can be tedious and very time consuming; the present invention helps preparing charcoal briquettes for use in a BBQ grill, in an easy and efficient manner. The device of the present invention is preferably portable and uses a fan to generate an air flow.

In fig. 1 a numeral 10 refers generally to an embodiment of the present starting fuel preparing device, including a housing defined by a peripheral wall 11. The device 10, which is also shown in a cross-sectional perspective view in fig. 1 b, allows for an efficient burning of solid starting fuel S placed by a user on a support or platform 30 and ignited, such as by a match. For this efficient burning the device 10 includes a fan activatable by a switch 2 and drawing air through the device 10 and out through dedicated air outlet structures to be discussed further below, using an internal air guiding structure.

The platform 30 is preferably defined by a removable disc supported by way of example by means resilient arms 3 seen best in fig. 1 b and pressing against the inside of wall 11. The platform 30 has an array of central openings 32 defining in the present context a second air outlet structure for a second air flow, around which openings 32 the starting fuel S is placed on the platform 30 by the user. In use of the device 10 streams of air exit the device 10 through the openings 32, as well as through an annular gap 38 defining in the present context a first air outlet structure for a first air flow, disposed adjacent the wall 11, between the platform 30 and the wall 11.

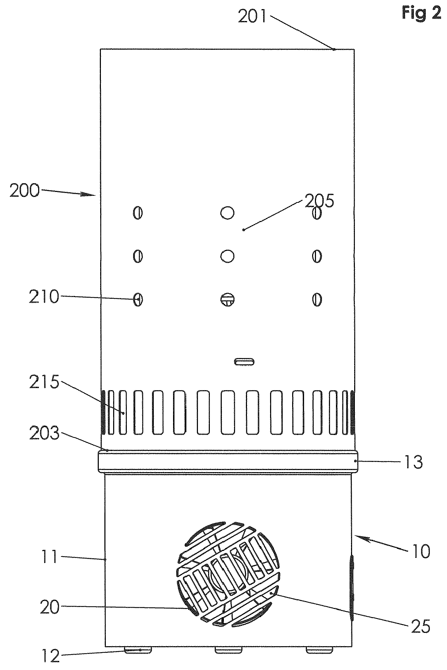

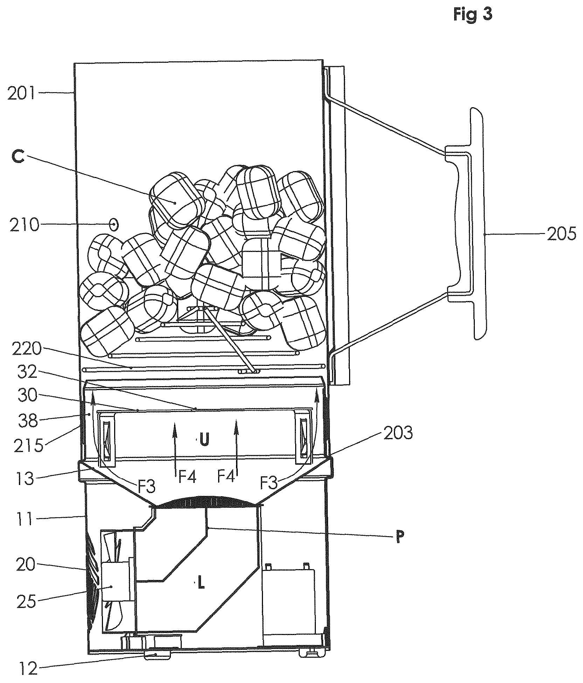

For combustion of charcoal, wood, or any similar solid cooking fuel C contained in a charcoal chimney 200, the latter is placed on top of the device 10, as shown in the side view of fig. 2 and in the cross-sectional view of fig. 3, after ignition of the starting fuel S. After ignition of the cooking fuel C by the burning starting fuel S the device 10 - still supporting the chimney 200 - assists in the further combustion of the cooking fuel C, after which the latter is transferred to a BBQ grill for cooking food.

Illustrative examples of a solid starting fuel S useful with the device 10 include lumps of paper and blocks of combustible resins and waxes (hydrocarbons), and mixtures thereof. Illustrative examples of cooking fuel C contained in the chimney 200 include wood, charcoal, charcoal briquettes, lump charcoal, and mixtures thereof.

Typically, cooking fuel C will have a longer burning time than starting fuel S, such as due to its inherent properties and/or due to the relative shape, mass, quantity, and/or configuration of the cooking and starting fuels. The starting fuel will often be easier to ignite, such as with a match, than cooking fuel, such as due to its inherent properties and/or due to the relative shape, mass, quantity, and/or configuration of the cooking and starting fuels. Accordingly, starting fuel S will typically be selected to burn hot and long enough to ignite the cooking fuel C and to assist in at least some of the initial combustion thereof. Cooking fuel C will typically be selected to burn for a sufficient period of time and at a sufficient temperature for use to barbeque food after being started by the starting fuel S.

The metal chimney 200, which typically has a height in the order of 25cm - 40cm, and the device 10 (which may have a typical height in the order of 10cm - 15cm) preferably each have a generally cylindrical contour defined by a respective generally cylindrical peripheral wall 201, 11. Where the chimney 200 is of a conventional type, such as of the Weber™ type, it will normally comprise a plurality of upper and lower ventilation openings 210, 215 formed in its peripheral wall 201, as well as a handle 205. The chimney 200 has a lower edge 203 by which the chimney 200 is removably supported on top of an upper peripheral ledge 13 of the device 10. At the same time, the chimney 200 receives a cylindrical peripheral upper section 50 of the device 10, as seen best in fig. 3.

Since dimensions of such BBQ chimneys 200 commonly found in the marketplace are fairly standard the device 10 will support almost any type of chimney 200. At the same time the peripheral section 50 through a relatively close abutment against the inside of wall 201 of the chimney 200 preferably blocks any lower ventilation holes 215 that may be provided closest to the lower edge 203 of the chimney 200, below the cooking fuel C supported inside the chimney 200. The cooking fuel C may preferably be supported by a conical grating 220 as shown also in US patent 5,469,835. The aforementioned blocking, or a near blocking, allows for a beneficial control of the flow of air through the chimney 200.

Shown in the fig. 2 is also a side opening 20 formed in the peripheral wall 11 defining the housing of the device 10. The opening 20, preferably being partially covered by a grid-structure, defines an air inlet; the drawings also show a plurality of blades that are part of a fan 25 located inside the device 10 and adapted for drawing air into the device 10, through the opening 20.

Fig. 3 is a cross-sectional view of the chimney 200 and device 10 of fig. 2, with the device 10 however having been turned 90° about a vertical central axis between the top portion T and base portion B thereof. In fig. 3 arrows denote the forced flow of air passing through the device 10 and into the chimney 200 as a result of an air guiding structure 150 inside the device 10, as explained now in details with reference to fig. 1 b, 4a and 4b.

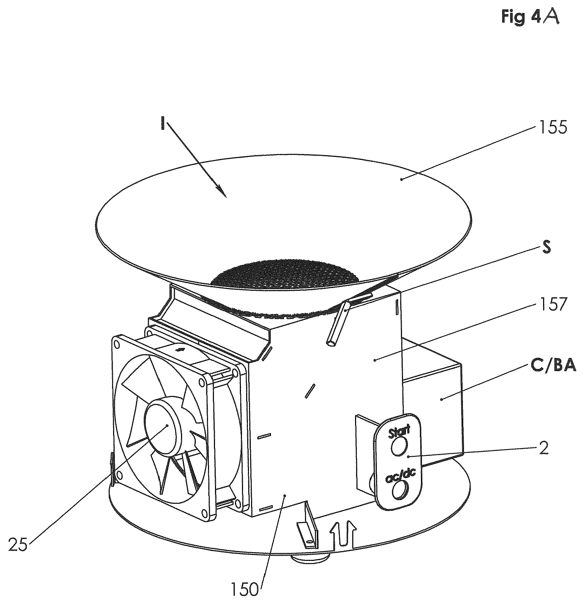

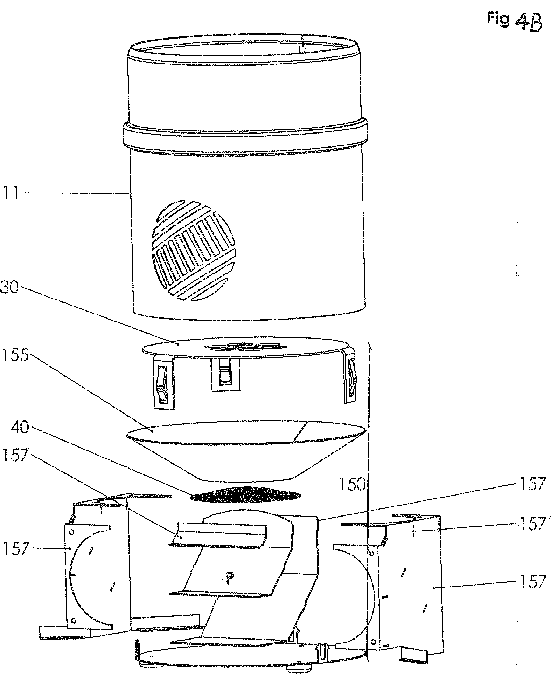

In fig. 4a letter I generally denotes an insert structure mounted inside the cylindrical wall 11 defining the housing of the device 10. The insert structure I includes electrical components, such as one or more temperature sensors (S), a controller C, a power source BA, and the fan 25, as well as the air guiding structure 150, the individual components of which are shown in exploded form in fig. 4b.

The metal air guiding structure 150 includes platform 30, a funnel-shaped, or essentially funnel-shaped wall 155 and opposite sides 157 (preferably tapped together using projecting flaps engaging slits 157'), and defines an air-flow chamber having a lower part L and an upper part U. The upper part U is configured for allowing for a fan-shaped flow first F3 of air towards the first air outlet structure 38, with a second flow F4 continuing towards the central openings 32. A flow passage defined in the lower part L has a partition P and is configured for reorientation on both sides of the partition P of air drawn into the housing by the fan 25, from a horizontal direction F1 into a vertical direction F2. The partition P is useful for splitting-up incoming air and ensuring that air is more uniformly distributed towards all air outlets 32, 38 in the region of the platform 30, i.e. such that air will not primarily flow towards exit openings located diametrically opposite the fan 25.

An air-pervious screen 40 is located between the upper part U and the lower part L to catch any debris falling into the device 10 through openings 32. Preferably, the fan 25 is arranged vertically below the platform 30 and draws in air through the opening 20 in the wall 11, the fan 25 preferably having an axis of rotation perpendicular to or essentially perpendicular to the side wall 11.

A thermal shield for protection of heat sensitive components on the insert I, such as the fan 25, is located between the platform 30 and the fan 25, and may be comprised by a portion of the air guiding structure 150, such as the funnel-shaped wall 155. The thermal shield may by way of example have a reflective surface and/or include a dedicated heat-insulating material. In particular, the thermal shield is so as to protect the fan 25 against direct radiation from hot surfaces above the fan 25.

The fan 25 referred to above preferably comprises a plurality of blades attached to an axle and a motor for driving the rotation of the axle. The fan 25 draws air into the lower air-flow chamber L and is operatively connected to the control switch 2, which can move between a first position to turn the fan 25 on and a second position to turn the fan component 25 off. The fan 25 is operatively connected to power source (e.g. a battery BA). In some embodiments, the fan component 25 is covered by a grate, as shown. An illustrative, non-exclusive example of a suitable energy source is a battery but a rechargeable power supply, a single-use power supply, an AC line current from an electrical outlet, and a DC current from an automobile battery or other battery may also be used. An example of a manually powered drive assembly is a hand crank that a user grasps and manually revolves to drive the fan 25.

A timer may be utilized to prevent more than a desired, or acceptable, amount of combustion of the cooking fuel C by reducing the speed of rotation of the fan 25. When the time interval has expired, timer may even interrupt the operation of the fan 25. A control mechanism C may be provided, adapted to maintain the air flow until the temperature of a portion of the air guiding structure 150 or a thermal shield 155 shielding the fan 25 and other electrical components has reduced to a predetermined threshold temperature. Such a mechanism may include the temperature sensor S configured to measure the temperature at a selected location or region of the device 10, and may include or be in communication with a controller C that only stops or otherwise interrupts or reduces the airflow provided by the fan 2, i.e. such as by completely stopping the fan 25, when the temperature is reduced to the threshold temperature. The temperature sensor may have any suitable construction, with illustrative, non-exclusive examples including thermal switches, bimetallic sensors, thermally activated circuit breakers, and the like.

The following list of aspects - preceding the claims section of the present application - is provided to serve as basis for the possible filing of divisional applications:
1. A starting fuel (S) preparing device (10) for a charcoal chimney starter (200), said device (10) including:
   - a top portion (T)
   - a base portion (B),
   - a wall (11) extending generally between said top portion (T) and said base portion (B) and defining a housing,
   - a platform (30) inside said wall (11) configured for supporting thereon said starting fuel (S) preferably in solid form,
   - a fan (25) for drawing combustion air into said housing,
   **characterised in**
   - an air guiding structure (150) disposed between said base portion (B) and said top portion (T),
   - said fan (25) being arranged vertically below said platform (30) to draw in said combustion air through an opening (20) in said wall (11), said fan (25) preferably having an axis of rotation perpendicular to or essentially perpendicular to said side wall (11).
   - a thermal shield (155) located between said platform (30) and said fan (25), a portion of said air guiding structure (150) preferably defining said thermal shield (155),
   - an air outlet structure (32, 38) disposed in connection with said platform (30),
   - said air guiding structure (150) being configured for guiding at least a portion of said combustion air to said air outlet structure (32, 38), and
   - said housing preferably being configured for directly or indirectly support of said charcoal chimney starter (200) above said platform (30).
2. The device of aspect 1, said air outlet structure including a first air outlet structure (38) disposed along said wall (11), between said platform (30) and said wall (11).
3. The device of aspect 2, said first air outlet structure (38) defined by a peripheral gap, such as an annular gap, between said platform (30) and said wall (11).
4. The device of aspect 1 or 2 or 3, said platform (30) including a second air outlet structure (32), such as a centrally located aperture, receiving another portion of said combustion air drawn into said housing.
5. The device according to any of the previous aspects, said air guiding structure (150) including a funnel-shaped, or essentially funnel-shaped wall (155).
6. The device according to any of the previous aspects, said air guiding structure (150) defining an air-flow chamber having a lower part (L) and an upper part (U), said upper part (U) preferably being configured for generating a fan-shaped flow (F3) of said combustion air towards said first air outlet structure (38).
7. The device according to the previous aspect, a flow passage defining said lower part (L) having a partition (P) and being configured for reorientation of said combustion air drawn into said housing, from a horizontal, or essentially horizontal flow direction (F1) into a vertical or essentially vertical flow direction (F2).
8. The device according to aspect 6 or 7, an air-pervious screen (40) being located between said upper part (U) and lower part (L) of said air flow chamber.
9. The device according to any of the previous aspects, including a temperature sensor and a controller configured to deactivate said fan (25) upon the temperature of said thermal shield being reduced below a predetermined threshold.

## Claims

1. A starting fuel (S) preparing device (10) for a charcoal chimney starter (200), said device (10) including:
- a top portion (T)
- a base portion (B),
- a wall (11) extending generally between said top portion (T) and said base portion (B) and defining a housing,
- a platform (30) inside said wall (11) configured for supporting thereon said starting fuel (S) preferably in solid form,
- a fan (25) for drawing combustion air into said housing,
**characterised in**
- an air guiding structure (150) disposed between said base portion (B) and said top portion (T),
- a first air outlet structure (38) disposed along said wall (11), between said platform (30) and said wall (11),
- said air guiding structure (150) being configured for guiding at least a portion of said combustion air to said first air outlet structure (38), and
- said housing preferably being configured for directly or indirectly support of said charcoal chimney starter (200) above said platform (30).

2. The device of claim 1, said first air outlet structure (38) defined by a peripheral gap, such as an annular gap, between said platform (30) and said wall (11).

3. The device of claim 1 or 2, said platform (30) including a second air outlet structure (32), such as in the form of a centrally, or essentially centrally, located aperture, receiving another portion of said combustion air drawn into said housing.

4. The device according to any of the previous claims, said air guiding structure (150) including a funnel-shaped, or essentially funnel-shaped wall (155).

5. The device according to any of the previous claims, said air guiding structure (150) defining an air-flow chamber having a lower part (L) and an upper part (U), said upper part (U) preferably being configured for generating a fan-shaped flow (F3) of said combustion air towards said first air outlet structure (38).

6. The device according to the previous claim, a flow passage in said lower part (L) having a partition (P) and being configured for reorientation of said combustion air drawn into said housing, from a horizontal, or essentially horizontal flow direction (F1) into a vertical or essentially vertical flow direction (F2).

7. The device according to claim 5 or 6, an air-pervious screen (40) being located between said upper part (U) and lower part (L) of said air flow chamber.

8. The device according to any of the previous claims, said fan (25) being arranged vertically below said platform (30) and to draw in said combustion air through an opening (20) in said wall (11), said fan (25) preferably having an axis of rotation perpendicular to or essentially perpendicular to said side wall (11).

9. The device according to the previous claim, a thermal shield (155) located between said platform (30) and said fan (25), a portion of said air guiding structure (150) preferably defining said shield.

10. A charcoal chimney starter device (200), preferably in the form of a canister with a handle, including the starting fuel preparing device (10) according to any of the previous claims.
